Europäisches Patentamt

(19) European Patent Office

Office européen des brevets

(11) Publication number: 0 454 473 A2

(12) EUROPEAN PATENT APPLICATION

(21) Application number: 91303774.3

(51) Int. Cl.⁵: G11B 5/72

(22) Date of filing: 26.04.91

(30) Priority: 26.04.90 US 514771

(43) Date of publication of application:
30.10.91 Bulletin 91/44

(84) Designated Contracting States:
DE FR GB

(71) Applicant: International Business Machines
Corporation
Old Orchard Road
Armonk, N.Y. 10504 (US)

(72) Inventor: Kulkarni, Ravindra Dattatraya
1117 Stanwood Place
San Jose, CA 95120 (US)
Inventor: Tang, Wing Tsang
5281 Country Oak Court
San Jose, CA 95136 (US)
Inventor: Wu, Anthony Wai
663 Briar Ranch Lane
San Jose, CA 95120 (US)

(74) Representative: Bailey, Geoffrey Alan et al
IBM United Kingdom Limited Intellectual
Property Department Hursley Park
Winchester Hampshire SO21 2JN (GB)

(54) Thin film magnetic disks.

(57) Thin film magnetic recording disks are lubricated with a layer of poly (alpha olefin hydrocarbon) having from 8 to 14 carbon atoms in the monomer and a lubricant viscosity of between $4 \times 10^{-4}$ to $7 \times 10^{-4}$ m²s⁻¹ (400 and 700 cstokes).

EP 0 454 473 A2

Jouve, 18, rue Saint-Denis, 75001 PARIS

The present invention is concerned with thin film magnetic disks, and more particularly with lubricants for and manufacture of thin film magnetic disks.

Japanese Patent 60,125,918 shows the use of a layer containing both low molecular weight polyolefin and a fluorine compound as a lubricant for a ferromagnetic metal thin film tape.

Japanese Patent 60,111,337 shows the use of a lubricant layer for ferromagnetic metallic thin film tapes. The lubricant is a low molecular weight polyolefin, preferably polypropylene.

Japanese Patent 72,032,002 slows recording tape to which a suspension of polyethylene or polypropylene powder is applied to the magnetic coating and subjected to heat and pressure between rolls.

Poly (alpha olefins hydrocarbons) have been used as lubricants in the automobile industry. They are commercially available materials which are manufactured by polymerization using a Ziegler catalyst.

In the computer industry lubrication of magnetic storage disks has been a problem for years, especially so in recent years with the introduction of thin film magnetic disks. The requirements for a lubricant become harder and harder to meet as data are packed closer and closer, and as the reading head becomes closer and closer to the recording medium, while moving at faster and faster speeds. Merely acting as a lubricant is only the first requirement. In addition, the lubricant must be capable of adhering to the surface at very high speeds. It must resist both spin-off and evaporation. It must not cause interference with the chemical or magnetic properties of the thin film recording medium. It must also be readily processable.

At present the most widely used lubricant for thin film magnetic disks is perfluoroalkyl polyether (PFPE). This is generally recognized as the most desirable material available up to the present. PFPE, however, has several severe disadvantages. In use, its performance is limited by lack of retention on thin film disks. It has the major disadvantage of requiring the use of Freon solvents when it is applied to the disk, and Freon solvents present environmental problems of great severity and complexity. PFPE, because of its perfluorinated chemical nature, does not allow the use of desirable additives, such as antiwear, antioxidant, antistatic and extreme pressure additives. Furthermore, PFPE is quite expensive.

The present invention overcomes these disadvantages of PFPE. According to one aspect of the present invention, there is provided a thin film magnetic disk comprising a nonmagnetic substrate, a thin film of magnetic recording medium on said substrate, and a layer of poly (alpha olefin hydrocarbon) having from 8 to 14 carbon atoms in the monomer and a lubricant viscosity of between $4 \times 10^{-4}$ to $7 \times 10^{-4}$ $m^2s^{-1}$ (400 to 700 cstokes) over said magnetic recording medium. (1 stoke = $10^{-4}$ $m^2s^{-1}$ and therefore 1 cstoke = $10^{-6}$ $m^2s^{-1}$).

It is one of the advantages of the poly (alpla olefin hydrocarbons) of the present invention that they are soluble in many common organic solvents in addition to Freon. These include, for example, alkanes and acetone, all of which are nontoxic and environmentally acceptable.

The overcoat layer of lubricant can be applied through a dipping or spraying of a solution. In general the preferred concentration of the dipping or spraying solution should be in the range 0.001 to 0.1 percent by weight, depending upon the final lubricant thickness that is desired. Such a layer can then be used with no additional steps required.

In a preferred variation of the present invention, the disk which has been coated with a layer of lubricant as described above, is exposed to an ultraviolet lamp, preferably with wave length of 185 to 254 nm for from about 5 to 15 minutes. This exposure bonds the lubricant to the disk. A solvent, for example acetone, can next be used to remove the unbonded fraction of the lubricant, or alternatively, the disk can be used without removing the unbonded fraction. there are thus 3 possible variations of the present inventions: (1) Only unbonded lubricant, (2) only bonded lubricant, and (3) a mixture of some bonded and some unbonded lubricant.

Disks of the present invention exhibit excellent properties, particularly in regard to stiction and durability. A disk of the present invention shows a water contact angle of 110 degrees, similar to that obtained with PFPE.

It should be noted that bonding of the present lubricants is obtained very efficiently at 254 nm, a wave length which is readily available with low pressure mercury lamps with no concern regarding ozone generation during the cure cycle.

EXAMPLE 1

A thin film magnetic disk comprising at aluminum substrate, a plated NiP layer, a CoCr based magnetic alloy and a sputtered carbon protective overcoat was spray applied with a dilute solution (70-mg/litre) of poly(1-octene) in acetone. The lube thickness, after three passes of spray, was found to be in the range of 350-400 nm as measured by ellipsometer. The lubed disk was then Contact Start Stop (CSS) tested with a thin film ceramic slider at ambient conditions. Greater than 20,000 CSS was achieved whith an average stiction value of less than 20 grams.

EXAMPLE 2

A thin film disk as described in Example 1. was spray lubed with a dilute solution (70 mg/litre) of poly(1-octene) in acetone to give a film thickness of 870 nm. The disk was then exposed to an ultraviolet source (wave length = 254 nm) for 10 minutes followed by an acetone extraction to remove the unbonded (mobile) fraction. The thickness of the bonded poly(1-octene) was determined by an ellipsometer and found to be in the range of 200 to 250 nm. The lubed disk was then Contact Start Stop (CSS) tested with a thin film slider at ambient conditions. Greater than 20,000 CSS was achieved.

## Claims

1. A thin film magnetic disk comprising a nonmagnetic substrate, a thin film of magnetic recording medium on said substrate, and a layer of poly (alpha olefin hydrocarbon) having from 8 to 14 carbon atoms in the monomer and a lubricant viscosity of between $4 \times 10^{-4}$ to $7 \times 10^{-4}$ m$^2$s$^{-1}$ (400 to 700 cstokes) over said magnetic recording medium.

2. A disk as claimed in claim 1 wherein the poly (alpha olefin hydrocarbon) is poly(1-octene).

3. A disk as claimed in any one of claims 1 or 2 further comprising a protective overcoat formed on said film of magnetic recording medium and wherein said lubricant layer is on said overcoat.

4. A disk as claimed in claim 3 wherein the poly (alpha olefin hydrocarbon) has been bonded to the overcoat.

5. A disk as claimed in claim 3 wherein the poly (alpha olefin hydrocarbon) has been partially bonded to the overcoat.

6. A thin film magnetic disk comprising a nonmagnetic substrate, a thin film of magnetic recording medium, a protective overcoat, and a layer of poly(1-octene).

7. A disk as claimed in claim 6 where in the poly(1-octene) has been bonded to the overcoat.

8. A disk as claimed in claim 6 wherein the poly(1-octene) has been partially bonded to the overcoat.

9. A method of manufacturing a thin film magnetic disk including the step of applying a layer of poly (alpha olefin hydrocarbon) having 8 to 14 carbon atoms in the monomer and a lubricant viscosity of between $4 \times 10^{-4}$ to $7 \times 10^{-4}$ m$^2$s$^{-1}$ (400 to 700 cstokes) to the surface of said disk.

10. A method as claimed in claim 9, wherein said poly (alpha olefin hydrocarbon) is poly (1-octane).

11. A method as claimed in any one of claims 9 or 10, wherein the poly (alpha olefin hydrocarbon) is applied in a solution of between 0.001 to 0.1 percent by weight.

12. A method as claimed in any one of claims 9, 10 or 11, wherein said layer is bonded to said disk by exposure to electromagnetic radiation with a wave length of between 185 to 254 nm.

13. A method as claimed in claim 12, wherein said exposure lasts for between 5 to 15 minutes.

14. A method as claimed in any one of claims 12 or 13, wherein after said exposure, unbonded lubricant is removed with a solvent.